# EUROPEAN PATENT APPLICATION

(11) **EP 1 731 568 A1**
(43) Date of publication of application: **13.12.2006**
(21) Application number: 05719936.6
(22) Date of filing: 03.03.2005
(51) Int. Cl.: C08L 51/08, C08K 5/36

(54) **ORGANOPOLYSILOXANE-CONTAINING GRAFT COPOLYMER COMPOSITION**

(30) Priority: 15.03.2004 JP 2004073565
(71) Applicant: Kaneka Corporation, Kita-ku Osaka-shi, Osaka 530-8288 (JP)
(72) Inventor: SAEGUSA, Kazunori, 6540035 Hyogo (JP); TONE, Hiroshi, Akashi-shi, Hyogo 674-0092 (JP)
(74) Representative: Vossius & Partner
(86) International application number: PCT/JP2005/003632
(87) International publication number: WO 2005/087866

(57) **Abstract**

A flame-retardant resin composition is disclosed which contains neither halogen nor phosphorus or reduced amounts of halogen and phosphorus, and has both excellent flame retardancy and impact resistance. An organopolysiloxane-containing graft copolymer composition comprises 100 parts by weight of an organopolysiloxane-containing graft copolymer (A) and 0.02 to 3.5 parts by weight of an alkali metal salt of sulfur-containing organic compound (B), the organopolysiloxane-containing graft copolymer (A) having a content of halogen atoms of 1,000 ppm or less, and a content of alkaline-earth metal atoms of 3,000 ppm or less. Alternatively, an organopolysiloxane-containing graft copolymer composition has a content of halogen atoms of 1,000 ppm or less, and a content of alkaline-earth metal atoms of 3,000 ppm or less.

## Description

### TECHNICAL FIELD

The present invention relates to an organopolysiloxane-containing graft copolymer composition, a flame retardant comprising the graft copolymer composition, and a flame-retardant resin composition containing the graft copolymer composition.

### BACKGROUND ART

Polycarbonate resins are widely used for electric and electronic parts, office automation (OA) equipment, household articles or construction materials because of excellent impact resistance, heat resistance, electrical characteristics, etc. Though the polycarbonate resins have higher flame retardancy than polystyrene resins, higher flame retardancy is still required in some fields, particularly in the field of electric and electronic parts, OA equipment, and the like. Thus the flame retardancy is improved by adding any of various flame retardants, and flame retarding with non-halogen or non-phosphorus flame retardants has been recently studied.

It has been proposed to use an organopolysiloxane compound (also referred to as "silicone") for a non-halogen or non-phosphorus flame retardant, but there has remained the problem of difficulty in obtaining a flame-retardant resin composition excellent in both flame retardancy and impact resistance. Examples of a known method for producing a flame-retardant resin composition having impact resistance using an organopolysiloxane compound include a method of mixing a thermoplastic resin with a composite rubber-based flame retardant prepared by graft polymerization of a vinyl monomer to a composite rubber which comprises organopolysiloxane rubber and polyalkyl (meth)acrylate rubber (refer to, for example, Patent Document 1), a method of mixing a thermoplastic resin with an organopolysiloxane-based flame retardant prepared by graft polymerization of a vinyl monomer to composite particles which comprise aromatic group-containing organopolysiloxane and a vinyl polymer (refer to, for example, Patent Document 2), and a method of mixing a thermoplastic resin with an organopolysiloxane-containing graft copolymer prepared by graft polymerization of a vinyl monomer to organopolysiloxane particles having a particle size of 0.2 µm or less (refer to, for example, Patent Documents 3 and 4).

Patent Document 5 discloses a method for decreasing the content of electrolytes in a graft copolymer by purifying the graft copolymer with hot water, an alcohol, and the like, in order to improve properties of a conductive layer, such as durability and resolution, the conductive layer being applied to photosensitive conductive materials for electrophotographic technology.
Patent Document 1: JP-A-2000-17029
Patent Document 2: JP-A-2000-226420
Patent Document 3: JP-A-2000-264935
Patent Document 4: JP-A-2002-348453
Patent Document 5: JP-A-2002-105122

### DISCLOSURE OF INVENTION

### PROBLEM TO BE SOLVED BY THE INVENTION

The present invention provides an organopolysiloxane-containing graft copolymer composition having excellent effect of improving flame retardancy and impact resistance, a non-halogen, non-phosphorus flame retardant, and a resin composition comprising the graft copolymer composition and having excellent flame retardancy and impact resistance.

### MEANS FOR SOLVING THE PROBLEM

As a result of intensive research for achieving the object of the present invention, the present inventors have found that the object can be achieved by an organopolysiloxane-containing graft copolymer composition containing respective specified amounts of halogen atoms, alkaline-earth metal atoms, and an alkali metal salt of sulfur-containing organic compound. This finding resulted in completion of the present invention.

Namely, the present invention relates to an organopolysiloxane-containing graft copolymer composition comprising 100 parts by weight of an organopolysiloxane-containing graft copolymer (A) and 0.02 to 3.5 parts by weight of an alkali metal salt of sulfur-containing organic compound (B), wherein the content of halogen atoms is 1,000 ppm or less, and the content of alkaline-earth metal atoms is 3,000 ppm or less.

The present invention also relates to an organopolysiloxane-containing graft copolymer composition produced by adding 0.02 to 3.5 parts by weight of an alkali metal salt of sulfur-containing organic compound (B) to 100 parts by weight of an organopolysiloxane-containing graft copolymer (A) having a content of halogen atoms of 1,000 ppm or less, and a content of alkaline-earth metal atoms of 3,000 ppm or less.

The present invention further relates to an organopolysiloxane-containing graft copolymer composition, wherein the organopolysiloxane-containing graft copolymer (A) is produced by polymerizing, in the presence of an organopolysiloxane (C) in a latex state, a vinyl monomer (F) comprising 100 to 50 % by weight of a polyfunctional monomer (D) having two or more polymerizable unsaturated bonds in its molecule and 0 to 50 % by weight of another copolymerizable monomer (E) in at least one step according to demand, and further polymerizing a vinyl monomer (G) in at least one step.

In a preferred embodiment, the present invention relates to an organopolysiloxane-containing graft copolymer composition, wherein the organopolysiloxane-containing graft copolymer (A) has a content of halogen atoms of 1,000 ppm or less, and a content of alkaline-earth metal atoms of 3,000 ppm or less.

In a preferred embodiment, the present invention relates to an organopolysiloxane-containing graft copolymer composition, wherein the alkali metal salt of sulfur-containing organic compound (B) is added to the organopolysiloxane-containing graft copolymer (A).

In a preferred embodiment, the present invention relates to an organopolysiloxane-containing graft copolymer composition, wherein the content of alkaline-earth metal is 200 to 3,000 ppm.

In a preferred embodiment, the present invention relates to an organopolysiloxane-containing graft copolymer composition, wherein the alkaline-earth metal is calcium.

In a preferred embodiment, the present invention relates to an organopolysiloxane-containing graft copolymer composition, wherein the organopolysiloxane-containing graft copolymer (A) is washed with a solvent.

In a preferred embodiment, the present invention relates to an organopolysiloxane-containing graft copolymer composition, wherein the solvent is water and/or an alcohol having 4 or less carbon atoms.

In a preferred embodiment, the present invention relates to an organopolysiloxane-containing graft copolymer compositon, wherein the organopolysiloxane-containing graft copolymer (A) is washed with water in an amount of 70 times or less the weight of the copolymer (A).

In a preferred embodiment, the present invention relates to an organopolysiloxane-containing graft copolymer composition, wherein the organopolysiloxane-containing graft copolymer (I) is washed with water at a temperature lower than 40°C.

The present invention further relates to a process for producing the above-described graft copolymer composition.

The present invention further relates to a flame retardant comprising the above-described graft copolymer composition.

The present invention further relates to a resin composition, further comprising a resin selected from thermoplastic resins, thermosetting resins, and elastomers.

In a preferred embodiment, the present invention relates to a resin composition, wherein the thermoplastic resin is a polycarbonate resin.

### THE EFFECT OF THE INVENTION

According to the present invention, a high degree of flame retardancy can be realized even in a thin-wall molded product having difficulty in exhibiting flame retardancy, and at the same time, excellent impact resistance can be imparted thereto.

### BEST MODE FOR CARRYING OUT THE INVENTION

Although preferred embodiments of the present invention will be described below, the present invention is not limited to the description below.

The present invention relates to an organopolysiloxane-containing graft copolymer composition including 100 parts by weight of an organopolysiloxane-containing graft copolymer (A) and 0.02 to 3.5 parts by weight of an alkali metal salt of sulfur-containing organic compound (B), wherein the content of halogen atoms is 1,000 ppm or less, and the content of alkaline-earth metal atoms is 3,000 ppm or less. The organopolysiloxane component in the organopolysiloxane-containing graft copolymer (A) of the present invention imparts impact resistance and preferably flame retardancy to a final molded product.

The composition may contain 100 parts by weight of the organopolysiloxane-containing graft copolymer (A) and 0.02 to 3.5 parts by weight of the alkali metal salt of sulfur-containing organic compound (B), the copolymer (A) having a content of halogen atoms of 1,000 ppm or less and a content of alkaline-earth metal atoms of 3,000 ppm or less.

The organopolysiloxane-containing graft copolymer (A) of the present invention is preferably produced by polymerizing, in the presence of an organopolysiloxane (C) in a latex state, a vinyl monomer (F) comprising 100 to 50 % by weight of a polyfunctional monomer (D) having two or more polymerizable unsaturated bonds in its molecule and 0 to 50 % by weight of another copolymerizable monomer (E) in at least one step according to demand, and further polymerizing a vinyl monomer (G) in at least one step. The organopolysiloxane (C) is preferably used in an amount of 30 parts by weight or more, more preferably 50 parts by weight or more, and preferably 95 parts by weight or less, more preferably 90 parts by weight or less. The vinyl monomer (F) is used in an amount of 0 part by weight or more, preferably 1 part by weight or more, and 10 parts by weight or less, preferably 7 parts by weight or less. The vinyl monomer (G) is preferably used in an amount of 5 parts by weight or more, more preferably 10 parts by weight or more, and preferably 70 parts by weight or less, more preferably 50 parts by weight or less. These components (C), (F), and (G) are used in a total of 100 parts by weight. When the organopolysiloxane (C), the vinyl monomer (F), and the vinyl monomer (G) are used in amounts out of the above ranges, it may become difficult to exhibit flame retardancy and impact resistance at the same time.

The organopolysiloxane (C) in a latex state can be produced by any of the known emulsion polymerization methods disclosed in JP-A-2000-226420 and JP-A-2000-834392, and US Patent Nos. 2891920 and 3294725. Namely, cyclic siloxane, typically such as 1,3,5,7-octamethylcyclotetrasiloxane (D4), and/or difunctional silane having a hydrolysable group, such as dimethyldimethoxysilane, and if required, di- or higher-functional alkoxysilane such as methyltriethoxysilane or tetrapropyloxysilane, and further if required, a graft-linking agent such as mercaptopropyldimethoxymethylsilane, methacryloyloxypropyldimethoxymethylsilane, vinyldimethoxymethylsilane, or vinylphenyldimethoxymethylsilane are emulsified preferably together with water and a surfactant using a homogenizer or the like. Thereafter, the resultant emulsion is adjusted to pH 4 or less, preferably 3 or less, and more preferably 2 or less by adding an acid, or adjusted to pH 8 or more, preferably 9.5 or more, and more preferably 11 or more by adding a base. Then, hydrolysis and condensation reaction are performed at a polymerization temperature of 0°C or more, preferably 30°C or more, more preferably 50°C or more, most preferably 60°C or more, and 150°C or less, preferably 120°C or less, and more preferably 95°C or less in preferably an inert gas atmosphere such as nitrogen or a vacuum-deaerated state.

The cyclic siloxane and/or the silane can be polymerized by a method using an organic polymer as seed particles as disclosed in JP-A-63-202630, JP-A-63-202631, and JP-A-4-258636, or a method using an organopolysiloxane latex as a seed latex as disclosed in JP-A-60-088040. Preferred examples of the method include a method using seed particles comprising an organic polymer having a swelling property for cyclic siloxane as disclosed in WO 03/068835, and a method using seed particles comprising a polymer having a latex particle size of 20 nm or less, preferably 15 nm or less, and more preferably 10 nm or less.

The organopolysiloxane latex produced by any of the above-described methods contains volatile, low-molecular-weight cyclic siloxane. However, in order to remove the volatile cyclic siloxane, steam stripping can be performed as disclosed in US Patent No. 4600436 and JP-A-2002-249582. Alternatively, the low-molecular-weight cyclic siloxane can be adsorbed on an adsorbent such as diatomite, and then filtered off as disclosed in JP-A-2002-121284.

In another applicable method for producing the organopolysiloxane (C) in a latex state, as disclosed in JP-A-11-222554 and JP-A-2001-288269, a linear or branched (modified) organopolysiloxane is used, the organopolysiloxane being partially substituted by a mercaptopropyl group, a methacryloyloxypropyl group, an acryloyloxypropyl group, a vinyl group, a vinylphenyl group, or an allyl group according to demand, and preferably having a content of volatile low-molecular-weight siloxane of 5 % or less and more preferably 1 % or less, a weight-average molecular weight of 10,000 or less, more preferably 5,000 or less, and most preferably 3,000 or less, and a terminal group such as a hydroxyl group, an amino group, or an hydrolyzable group such as an alkoxyl group, or an acyloxy group. The organopolysiloxane is subjected to mechanically forced emulsification together with a graft-linking agent such as silane having a mercaptopropyl group, a methacryloyloxypropyl group, an acryloyloxypropyl group, a vinyl group, a vinylphenyl group, or an allyl group according to demand, for example, using a high-pressure homogenizer in the presence of water, a surfactant, etc. so that a desired particle size is obtained. Then, polymerization is performed at a temperature of 0°C or more, preferably 15°C or more, more preferably 25°C or more, and preferably 100°C or less, more preferably 70°C or less, and most preferably 50°C or less. In this method, the pH is adjusted with an acid or base to the same range as in above-mentioned polymerization of the cyclic siloxane and/or the silane. When the organopolysiloxane containing a small amount of a volatile low-molecular-weight siloxane is used as a raw material, the organopolysiloxane (C) reduced in amount of the volatile low-molecular-weight siloxane can be obtained by properly selecting polymerization conditions.

When polymerization of the cyclic siloxane and/or the silane or forced emulsification polymerization of the (modified) organopolysiloxane is performed under acidic polymerization conditions, a surfactant exhibiting a surface-active ability even under acidic conditions is used. Usable examples of such a surfactant include anionic surfactants such as metal salts of alkyl sulfates, metal salts of alkylsulfonic acids, and metal salts of alkylarylsulfonic acids. As the metal salt, an alkali metal salt, particularly a sodium salt or potassium salt, is preferably selected, and sodium dodecylbenzenesulfonate is most preferred. Other examples of the surfactant include nonionic surfactants such as polyoxyalkylene alkyl ethers, typically polyoxyethylene dodecyl ether; polyoxyalkylene alkylaryl ethers, typically polyoxyethylene nonylphenyl ether; polyoxyalkylene higher fatty acid esters, typically polyoxyethylene stearate; and sorbitan monolaurate. The nonionic surfactant can be combined with the anionic surfactant.

Examples of the acid used for establishing acidic conditions include inorganic acids such as sulfuric acid, hydrochloric acid, and nitric acid; and organic acids such as dodecylbenzenesulfonic acid, dodecylsulfuric acid, and trifluoroacetic acid. An alkylarylsulfonic acid, typically dodecylbenzenesulfonic acid, functions not only as an acid component but also as a surfactant, and thus, in some cases, only the alkylarylsulfonic acid is preferably used. However, the acid and surfactant are not limited to these compounds, and one or a combination of at least two thereof may be used as each of the acid and the surfactant. After the polymerization is completed under acidic conditions, the latex can be aged near room temperature for several hours or more to increase the molecular weight of the resultant organopolysiloxane according to demand. Then, the system can be neutralized to pH 5 to 8 by adding an inorganic base such as sodium hydroxide, potassium hydroxide, sodium carbonate, or ammonia, or an organic base such as alkylamine or alkylammonium hydroxide, to terminate the polymerization.

Similarly, a surfactant exhibiting a surface-active ability even under basic conditions is used for the polymerization under basic conditions. Preferred examples of such a surfactant include cationic surfactants such as alkyltrimethylammonium bromides, e.g., dodecyltrimethylammonium bromide and stearyltrimethylammonium bromide; and dialkyldimethylammonium bromides, e.g., didodecyldimethylammonium bromide. Also, any of the above-described nonionic surfactants can be used, or the cationic and nonionic surfactants can be combined. Usable examples of the base for establishing basic conditions include inorganic bases such as potassium hydroxide and sodium hydroxide, and organic bases such as alkylammonium hydroxide. The tetraorganoammonium hydroxide such as cetyltrimethylammonium hydroxide, which is disclosed in JP-A-2001-106787, functions as both a cationic surfactant and a base. In some cases, this hydroxide may be preferably used alone. However, the base and surfactant are not limited to these compounds, and one or a combination of at least two thereof may be used as each of the base and the surfactant. After the polymerization is completed under basic conditions, aging can be performed according to demand, and then the system can be neutralized with an inorganic acid such as sulfuric acid, or an organic acid such as acetic acid or dodecylbenzenesulfonic acid to terminate the polymerization of siloxane in the same manner as mentioned above.

The average particle size of the organopolysiloxane (C) in a latex state is preferably 0.008 µm to 0.6 µm and more preferably 0.01 µm to 0.3 µm. With an average particle size of less than 0.008 µm, it is often difficult to stably produce the latex, while with an average particle size of over 0.6 µm, the flame retardancy and impact resistance of the final molded product may degrade.

In the present invention, the vinyl monomer (F) is used for improving the flame-retarding effect and the effect of improving impact resistance. The vinyl monomer (F) comprises 100 to 50 % by weight, preferably 100 to 80 % by weight, of a polyfunctional monomer (D) containing at least two polymerizable unsaturated bonds in its molecule, and 0 to 50 % by weight, preferably 0 to 20 % by weight, of another copolymerizable monomer (E). When the amount of the polyfunctional monomer (D) is excessively small, or when the amount of the copolymerizable monomer (E) is excessively large, the effect of improving the impact resistance of the final graft copolymer tends to decrease.

Specific examples of the polyfunctional monomer (D) include allyl methacrylate, ethyleneglycol dimethacrylate, 1,3-butyleneglycol dimethacrylate, and divinylbenzene. These monomers may be used alone or in combination of two or more.

Specific examples of the copolymerizable monomer (E) include aromatic vinyl monomers such as styrene and α-methylstyrene; vinylcyanide monomers such as acrylonitrile; and (meth)acrylate monomers such as methyl acrylate, ethyl acrylate, butyl acrylate, methyl methacrylate, ethyl methacrylate, and butyl methacrylate. These monomers may be used alone or in combination of two or more.

In the present invention, the vinyl monomer (G) is used for securing compatibility between the organopolysiloxane-containing graft copolymer (A) and a thermoplastic resin in order to uniformly disperse the graft copolymer in the thermoplastic resin. Specific examples of the monomer (G) include the same as those of the copolymerizable monomer (E) in the vinyl monomer (F). These monomers may be used alone or in combination of two or more. The vinyl monomer (G) can be combined with a functional group-containing vinyl polymer including a carboxyl group-containing vinyl monomer such as itaconic acid, (meth)acrylic acid, fumaric acid, or maleic acid; an epoxy group-containing vinyl polymer, such as glycidyl methacrylate; or a hydroxyl group-containing vinyl polymer such as 2-hydroxyethyl methacrylate or 4-hydoxybutyl acrylate.

A radical polymerization initiator used for polymerizing the vinyl monomer (F) and the vinyl monomer (G) is not particularly limited. Usable examples of the initiator include thermal decomposition-type initiators such as 2,2'-azobisisobutyronitrile and potassium persulfate; and redox-type initiators comprising a peroxide such as an organic peroxide or an inorganic peroxide, a reducing agent, and if necessary, a transition metal salt and further if necessary, a chelating agent; the organic peroxide including, for example, tert-butyl peroxyisopropylcarbonate, paramenthane hydroperoxide, cumene hydroperoxide, tert-butyl peroxide and tert-hexyl peroxide, the inorganic peroxide including, for example, hydrogen peroxide and potassium persulfate, the reducing agent including, for example, sodium formaldehyde sulfoxylate and glucose, the transition metal salt including, for example, iron(II) sulfate, and the chelating agent including, for example, disodium ethylenediaminetetraacetate. When the redox-type initiator is used, the polymerization can be performed even at a low temperature which causes substantially no thermal decomposition of the peroxide, and thus the polymerization temperature can be desirably set in a wide range.

The amount of the radical polymerization initiator used is preferably 0.005 part by weight or more, more preferably 0.01 part by weight or more, most preferably 0.04 part by weight or more, and preferably 20 parts by weight or less, more preferably 10 parts by weight or less, and most preferably 5 parts by weight or less, relative to 100 parts by weight of the vinyl monomer (F). When the amount of the radical polymerization initiator is small, the reaction rate tends to decrease to deteriorate the production efficiency. When the amount is excessively large, heat generation in the reaction tends to increase to cause difficulty of production or decrease the strength of a final molded product. The amount of the radical polymerization initiator mentioned above can also be applied to the vinyl monomer (G).

In polymerizing the vinyl monomer (F) and the vinyl monomer (G), a chain transfer agent such as tert-dodecyl mercaptan can be used in an amount of preferably 5 parts by weight or less according to demand.

When the organopolysiloxane (C) is in a latex state, the vinyl monomer (F) and the vinyl monomer (G) are preferably polymerized by emulsion polymerization. In the emulsion polymerization, the solid content in the resulting latex of the organopolysiloxane-containing graft copolymer (A) is preferably 10 % by weight or more, more preferably 20 % by weight or more, and most preferably 30 % by weight or more from the viewpoint of productivity. Also, the solid content is preferably 70 % by weight or less and more preferably 55 % by weight or less from the viewpoint of stability of the latex. In this polymerization, conditions such as the polymerization temperature, pressure, deoxidation, and the like may be determined in ranges known by persons skilled in the art.

After the organopolysiloxane-containing graft copolymer (A) in a latex state is produced by the emulsion polymerization, a di- or higher-valent metal salt such as calcium chloride, magnesium chloride, magnesium sulfate, or aluminum chloride is added to coagulate the latex, followed by heat treatment, dehydration, and drying to separate the copolymer (A) from an aqueous medium (coagulation method). In particular, from the viewpoint of availability at low cost, handling safety, and environmental consideration, an alkaline-earth metal halide such as calcium chloride or magnesium chloride, or magnesium sulfate is preferably used as the di- or higher-valent metal salt.

The organopolysiloxane-containing graft copolymer (A) recovered as described above is used for a resin composition of the present invention. The copolymer composition of the present invention is preferably controlled so that the content of halogen atoms, particularly chlorine atoms, is 1,000 ppm or less, preferably 700 ppm or less, more preferably 400 ppm or less, and most preferably 200 ppm or less, and the content of an alkaline-earth metal, particularly calcium atoms and/or magnesium atoms, is 3,000 ppm or less, preferably 2,000 ppm or less, more preferably 1,700 ppm or less, and most preferably 1,000 ppm or less. When the contents of the halogen atoms and the alkaline-earth metal atoms exceed the above values, undesirably, flame retardancy is not sufficiently exhibited. The content of the alkaline-earth metal is preferably as low as possible from the viewpoint of flame retardancy, but the effect of improving flame retardancy tends to be saturated at a certain content. From the viewpoint of a complicated process for decreasing the content, an increase in the amount of the washing solvent (water or alcohol) used, or the like, the content may exceed 200 ppm and is preferably 250 ppm or more, more preferably 300 ppm or more, and most preferably 400 ppm or more. Although a method for decreasing the contents of the halogen atoms and the alkaline-earth metal atoms to the above-described values is not limited, washing with a solvent is preferred.

As the solvent, water or an alcohol having 4 or less carbon atoms, such as methanol, ethanol, or isopropyl alcohol, is preferred, and water or methanol is particularly preferred, in order to increase the washing efficiency. An example of the method of washing with the solvent is a method in which the latex containing the organopolysiloxane-containing graft copolymer (A) is coagulated and heat-treated, and then washed with, preferably, water and/or methanol in dehydration. In a preferred embodiment, the graft copolymer may previously satisfy the contents of the halogen atoms and the alkaline-earth metal atoms. A usable method for producing the graft copolymer previously satisfying the contents comprises redispersing the recovered organopolysiloxane-containing graft copolymer (A) in the solvent, preferably water and/or methanol, before or after drying, and then filtering and drying the copolymer. Among the above-described solvents, water is preferably used in view of economics and environmental load.

In case that it is desired to recover the copolymer as a powder, when a solvent other than water is used, a satisfactory powder may be obtained by re-dispersion in water and filtration after the use of the solvent. The amount of the solvent, preferably water, used is preferably 70 times or less and more preferably 50 times or less in view of the problem of increasing the amount of the wastewater treated. The temperature of the solvent used for washing and re-dispersion, such as water, is not particularly limited, and the solvent at room temperature is preferably used because the equipment for temperature control can be omitted.

Furthermore, when water is used as the solvent, use of high-temperature water causes secondary aggregation of the organopolysiloxane-containing graft copolymer (A) to degrade handleability of the dispersion and increase the amount of coarse particles, thereby degrading the properties of the resultant powder. Therefore, the temperature of the water used is preferably less than 40°C, more preferably 35°C or less, and most preferably room temperature. Another conceivable method for decreasing the contents of the halogen atoms and the alkaline-earth metal atoms comprises adding an organic solvent having slight water-solubility, such as methyl ethyl ketone, to the latex containing the organopolysiloxane-containing graft copolymer (A) to extract the organopolysiloxane-containing graft copolymer (A) component of the latex into an organic solvent layer, separating the organic solvent layer, and then mixing the organic solvent layer with water to precipitate the organopolysiloxane-containing graft copolymer (A) component.

The organopolysiloxane-containing graft copolymer (A) can also be recovered by spray-drying the latex of the organopolysiloxane-containing graft copolymer (A). Even in this case, the contents of the halogen atoms and the alkaline-earth metal atoms are decreased to the above-described values.

Since the spray-drying method does not require the above-mentioned coagulation with a di- or higher-valent metal salt, when raw materials for polymerization are appropriately selected, a powder containing neither halogen atom nor alkaline-earth metal atom or containing trace amounts of these atoms can be recovered at the end of spray-drying. In this method, all the auxiliary raw materials used for polymerization may coexist with the organopolysiloxane-containing graft copolymer (A) and cause the problem of resin decomposition and coloring when being finally kneaded and molded together with a thermoplastic resin or thermosetting resin, particularly a polycarbonate resin. Therefore, from the viewpoint that the auxiliary raw materials can be separated in dehydration to eliminate the occurrence of the problem in final kneading and molding, the coagulation method is preferred.

However, when the organopolysiloxane-containing graft copolymer (A) must be recovered by the spray-drying method, the resulting powder is preferably further washed by a method comprising re-dispersion in a solvent such as water, methanol, or ethanol, filteration, and drying.

The alkali metal salt of sulfur-containing organic compound (B) used in the present invention can synergistically improve flame retardancy when being combined with the organopolysiloxane-containing graft copolymer (A). As the alkali metal salt (B), one metal salt or combination of at least two metal salts may be used.

Preferred examples of the alkali metal salt of sulfur-containing organic compound (B) include metal salts of sulfonic acid, metal salts of sulfuric acid monoester, and metal salts of sulfonamide. Among these metal salts, metal salts of sulfonic acid are preferably used from the viewpoint of flame retardancy, and metal salts of (alkyl)arylsulfonic acid, metal salts of perfluoroalkanesulfonic acid, metal salts of aliphatic sulfonic acid, metal salts of diarylsulfone sulfonic acid, and metal salts of alkylsulfuric acid are particularly preferably used. Examples of the metal of the metal salt include sodium, potassium, lithium, rubidium, and cesium. Preferably, sodium or potassium is used.

Specific examples of the metal salts of sulfonamide include sodium salt of saccharin, sodium salt of N-(p-tolylsulfonyl)-p-toluene sulfonamide, sodium salt of N-(N'-benzylaminocarbonyl)sulfanylimide, and sodium salt of N-(phenylcarboxyl)-sulfanylimide. Examples of the metal salts of (alkyl)arylsulfonic acid include sodium dodecylbenzenesulfonate, sodium p-toluenesulfonate, sodium dichlorobenzenesulfonate, and sodium benzenesulfonate. Examples of the metal salts of perfluoroalkanesulfonic acid include potassium perfluorobutanesulfonate and potassium perfluoromethylbutanesulfonate. Examples of the metal salts of aliphatic sulfonic acid include sodium dodecylsulfonate and sodium dioctylsulfosuccinate. Examples of the metal salts of diarylsulfone sulfonic acid include potassium diphenylsulfone-3-sulfonate, potassium 4,4'-dibromodiphenylsulfone-3-sulfonate, potassium 4-chloro-4'-nitrodiphenylsulfone-3-sulfonate, and potassium diphenylsulfone-3,3'-disulfonate. Examples of the metal salts of alkylsulfuric acid include sodium dodecylsulfate.

Among these metal salts, potassium diphenylsulfone-3-sulfonate, potassium perfluorobutanesulfonate, and sodium dodecylbenzenesulfonate are particularly preferably used from the viewpoint that halogen is never contained, and flame retardancy is improved with a small amount. The sodium salts of (alkyl)arylsulfonic acids, typically such as dodecylbenzenesulfonic acid, are most preferred because of the industrial availability at low cost.

The alkali metal salt of sulfur-containing organic compound (B) is used in an amount of 0.02 part by weight or more (preferably 0.05 part by weight or more and more preferably 0.1 part by weight or more) and 3.5 parts by weight or less (preferably 2 parts by weight or less and more preferably 1.0 part by weight or less) relative to 100 parts by weight of the organopolysiloxane-containing graft copolymer (A) .

As the contents of chlorine and an alkaline-earth metal decrease, the flame retardancy of the resin composition comprising the copolymer composition and a thermoplastic resin tends to decrease. On the other hand, when a specified amount of the alkali metal salt of sulfur-containing organic compound is contained in the organopolysiloxane-containing graft copolymer composition, the flame retardancy and strength tend to increase as the contents of chlorine and an alkaline-earth metal decrease. Even when the contents of chlorine and an alkaline-earth metal are not decreased by means for decreasing the contents and are thus higher than the ranges of the present invention, the effect of improving flame retardancy and strength, particularly flame retardancy, may be exhibited. However, the improving effect is particularly exhibited when the contents are specified according to the present invention. Although decrease in the strength of the resin composition may be observed due to the presence of the alkali metal salt of sulfur-containing organic compound (B) according to circumstances, the above-described ranges are preferred for achieving the excellent effect of improving flame retardancy and a balance between strength and flame retardancy. With the contents lower than the above ranges, there is no or substantially no effect of improving flame retardancy. In contrast, with the contents higher than the above ranges, the flame retardancy undesirably deteriorates.

The organopolysiloxane-containing graft copolymer composition of the present invention can be mixed with a resin such as a thermoplastic resin, a thermosetting resin, or an elastomer, and preferably used as a flame retardant for thermoplastic resins and thermosetting resins. The resin composition prepared by mixing the organopolysiloxane-containing graft copolymer composition of the present invention with a thermoplastic resin or thermosetting resin can be used as a flame-retardant resin composition capable of imparting high flame retardancy and high impact resistance to the final molded product.

In the present invention, the amount of the organopolysiloxane-containing graft copolymer composition used for the thermoplastic resin or thermosetting resin is 0.1 part by weight or more, preferably 1 part by weight or more, and 20 parts by weight or less, preferably 10 parts by weight or less, and more preferably 6 parts by weight or less, relative to 100 parts by weight of the resin. With an amount over the above range, flame retardancy is not exhibited, and melt flow may decrease in use of the thermoplastic resin. With an amount less than the range, undesirably, both the flame retardancy and the impact resistance tend to be not exhibited.

In particular, when a polycarbonate resin is used as the thermoplastic resin or thermosetting resin, flame retardancy is desirably easily exhibited. The concept of the term "polycarbonate resin" means that the content of the polycarbonate resin is 50 % by weight or more relative to the total of the polycarbonate resin and another resin. The content of the polycarbonate resin is preferably 70 % by weight or more relative to the total of the polycarbonate resin and another resin. The polycarbonate resin is most preferably used substantially alone. The term "substantially alone" means that at least the polycarbonate resin is contained in an amount of 95 % by weight or more. When the content of the polycarbonate resin is within the above range, high flame retardancy and impact resistance can be obtained in a well-balanced manner. This effect increases as the ratio of the polycarbonate resin increases. As the polycarbonate resin, a copolymer such as a polyester-polycarbonate resin can also be used, but in this case, the ratio of the polycarbonate unit to the total of resins is determined as described above. Examples of the other resin contained in the polycarbonate resin include polyester resins such as polyethylene terephthalate resins and polybutylene terephthalate resins; acrylonitrile-styrene copolymer resins; butadiene-styrene copolymer (HIPS) resins; acrylonitrile-butadiene rubber-styrene copolymer (ABS) resins; acrylonitrile-butadiene rubber-α-methylstyrene copolymer resins; styrene-butadiene rubber-acrylonitrile-N-phenylmaleimide copolymer resins; and acrylonitrile-acrylic rubber-styrene copolymer (AAS) resins.

The organopolysiloxane-containing graft copolymer composition of the present invention can be mixed with the thermoplastic resin or thermosetting resin by a Henschel mixer, a ribbon blender, or the like, followed by melt-kneading with a roll, an extruder, a kneader, or the like.

In mixing, ordinary additives such as an antioxidant, an anti-dripping agent, a high molecular weight process aid, a flame retardant, an impact modifier, a plasticizer, a lubricant, an ultraviolet absorber, a pigment, glass fibers, a filler, a polymer lubricant, and the like can be mixed. In particular, a fluorocarbon resin such as polytetrafluoroethylene or polyvinylidene fluoride can be used as the anti-dripping agent in a combustion test such as UL-94 test. The amount of the anti-dripping agent used is preferably 2 parts by weight or less, more preferably 1 part by weight or less, most preferably 0.6 part by weight or less, and preferably 0.1 part by weight or more, relative to 100 parts by weight of the thermoplastic resin or thermosetting resin because a preventive effect can be desirably obtained when dripping becomes a problem.

When the flame-retardant resin composition of the present invention is produced using the organopolysiloxane-containing graft copolymer composition of the present invention and the thermoplastic resin, the resin composition can be molded by a method for molding general thermoplastic resin compositions, i.e., injection molding, extrusion molding, blow molding, calendering, or the like. When the resin composition is produced using the thermosetting resin, an applicable method comprises introducing the flame-retardant resin composition of the present invention in a mold, and then curing it by heating or the like.

The resultant molded product has excellent impact resistance and excellent flame retardancy.

### EXAMPLES

The present invention will be described in detail on the basis of Examples, but the present invention is not limited to these examples. In the description below, "parts" represents "parts by weight". In the Examples and Comparative Examples, measurement and tests were conducted as follows:

### [Polymerization conversion]

A latex was dried by a hot-air dryer at 120°C for 1 hour to determine a solid content, and a conversion was calculated by the equation: 100x(solid content/charge amount of monomer) (%).

### [Volume-average particle size]

The volume-average particle sizes of a seed polymer, organopolysiloxane particles, and a graft copolymer were measured in a latex state. The volume-average particle size (µm) was measured with a measuring device, MICROTRAC UPA150 manufactured by Nikkiso Co., Ltd.

### [Content of volatile siloxane]

The content of volatile siloxane was determined by gas chromatographic (GC) analysis as follows: Methyl ethyl ketone was added to the latex to perform extraction, and octamethyltrisiloxane was added as an internal standard to the organic layer. Gas chromatography was performed by Gas Chromatograph GC-14B (manufactured by Shimadzu Corporation) using a 3 mmφ × 3 m Silicone DC-550 column filled with 20 wt % Chromosolv WNAW #60-80. The amounts of octamethyltetracyclosiloxane (D4), decamethylcyclopentasiloxane (D5), and dodecamethylcyclohexasiloxane (D6) were measured by the analysis, and the ratio of the total of these amounts to the resin solid content was determined as the content of volatile siloxane.

### [Content of halogen atoms and alkali metal atoms]

Three gram of a powder was quantitatively analyzed in a helium atmosphere using Spectro Energy Dispersive Fluorescent X-Ray Analyzer XEPOS manufactured by Rigaku Denki Kogyo Co., Ltd.

### [Amount of coarse particles]

The organopolysiloxane-containing graft copolymer after re-dispersion in a solvent and filtration was dried in still standing, and the resultant dry powder was sorted through a 0.45-mm opening sieve to determine: (weight of particles on sieve)/(total weight before sieving) (%) as a content of coarse particles.

### [Impact resistance]

Impact resistance was evaluated by an Izod test at 0°C using a notched 1/8-inch bar according to ASTM D-256.

### [Flame retardancy]

Flame retardancy was evaluated by a UL94V test.

### REFERENCE EXAMPLE 1

### Production of polybutyl acrylate seed polymer (SD-1)

In a five-neck flask equipped with a stirrer, a reflux condenser, a nitrogen blowing port, a monomer adding port, and a thermometer, 400 parts by weight of water and 12 parts by weight (solid) of a 15 % aqueous solution of sodium dodecylbenzenesulfonate (Neopelex G15 manufactured by Kao Corporation) were mixed, and the resultant mixture was heated to 50°C. After the liquid temperature reached 50°C, the flask was purged with nitrogen. Then, 10 parts by weight of butyl acrylate and 3 parts by weight of tert-dodecyl mercaptan were added. Thirty minutes after, 0.01 part by weight (solid) of paramenthane hydroperoxide, 0.3 part by weight of sodium formaldehyde sulfoxlate (SFS), 0.01 part by weight of disodium ethylenediaminetetraacetate (EDTA), and 0.0025 part by weight of ferrous sulfate (FeSO₄·7H₂O) were added to the mixture, followed by stirring for 1 hour. Then, a mixed solution containing 90 parts by weight of butyl acrylate, 27 parts by weight of tert-dodecyl mercaptan, and 0.09 part by weight (solid) of paramenthane hydroperoxide was continuously added to the mixture over 3 hours. Then, post-polymerization was performed for 2 hours to obtain a latex containing a seed polymer (SD-1) having a particle size of 0.03 µm at a polymerization conversion of 90 % (tert-dodecyl mercaptan also regarded as a raw material component).

### REFERENCE EXAMPLES 2 and 3

### Production of organopolysiloxane particles (S-1 and 2)

Each of the compositions shown in Table 1 was stirred with a homomixer at 7,500 rpm for 5 minutes to prepare a siloxane emulsion. Separately, the seed polymer (SD-1) latex corresponding to the solid content shown in Table 1 was charged in a five-neck flask equipped with a stirrer, a reflux condenser, a nitrogen bowing port, a monomer adding port, and a thermometer. Then, the whole siloxane emulsion prepared as described above was added to the flask. The reaction system was heated from 35°C to 80°C over 1 hour under stirring in a nitrogen stream, and then 1 part by weight (solid) of a 10 % aqueous solution of dodecylbenzenesulfonic acid (DBSA, Neopelex GS manufactured by Kao Corporation) was added. After reaction for 15 hours, the reaction mixture was cooled to 25°C and then allowed to stand for 20 hours. Then, the pH of the system was adjusted to 6.5 with a 3 % aqueous sodium hydroxide solution to terminate polymerization. As a result, a latex containing organopolysiloxane particles (S-1 or 2) was obtained. The measurement results of the polymerization conversion and the particle size of each latex containing the organopolysiloxane particles are shown in Table 1.

**TABLE 1**

| Reference Example | | | | 2 | 3 | 4 |
|---|---|---|---|---|---|---|
| Polyorganosiloxane particle | | | | S-1 | S-2 | S-3 |
| | Seed polymer | SD-1 | Parts | 2 | 2 | - |
| | Siloxane emulsion | Ion-exchanged water | Parts | 280 | 280 | 200 |
| | | SDBS | Parts | 0.5 | 0.5 | 1 |
| | | DBSA | Parts | - | - | 1 |
| | | D4 | Parts | 94 | 94 | - |
| | | DHPDMS | Parts | - | - | 100 |
| | | DSMA | Parts | 4 | - | - |
| | | MPrDMS | Parts | - | 4 | 2.5 |
| | Polymerization catalyst | DBSA | Parts 1 | - | 1 | - |
| Polymerization conversion | | | | 86 % | 86 % | 96 % |
| Volume-average particle size | | | µm | 0.24 | 0.23 | 0.28 |
| Content of volatile siloxane | | | | 14 % | 14% | 4 % |

### REFERENCE EXAMPLE 4

### Production of polyorganosiloxane particles (S-3)

The composition shown in Table 1 was stirred with a homomixer at 10,000 rpm for 5 minutes, and then passed three times through a high-pressure homogenizer under a pressure of 500 bar to prepare a siloxane emulsion. The whole emulsion was immediately charged in a five-neck flask equipped with a reflux condenser, a nitrogen blowing port, a monomer adding port, and a thermometer. Then, the reaction was performed at 30°C for 6 hours under stirring of the system, and then the reaction mixture was cooled to 23°C and allowed to stand for 20 hours. Then, the pH of the system was returned to 6.8 with sodium hydroxide to terminate polymerization. As a result, a latex containing polyorganosiloxane particles (S-3) was obtained. The measurement results of the polymerization conversion and the particle size of the latex containing the organopolysiloxane particles are shown in Table 1.

### REFERENCE EXAMPLES 5 to 7

### Organopolysiloxane-based graft copolymer (SG-1 to 3)

In a five-neck flask equipped with a stirrer, a reflux condenser, a nitrogen blowing port, a monomer adding port, and a thermometer, 240 parts by weight (including the water taken from the latex containing organosiloxane particles) of ion-exchanged water, and each of the latexes of organopolysiloxane particles (S-1 to 3) prepared in Reference Examples 2 to 4 in the amount shown in Table 2 (corresponding to the solid content) were charged, and the reaction system was heated to the temperature shown in Table 2 under stirring in a nitrogen stream. One hour after the attainment of the temperature shown in Table 2, 0.2 part by weight of sodium formaldehyde sulfoxlate (SFS), 0.01 part by weight of disodium ethylenediaminetetraacetate (EDTA), and 0.0025 part by weight of ferrous sulfate were added to the reaction mixture, and the whole of a graft monomer mixture (MG-1) having each of the compositions shown in Table 2 was added at once, followed by stirring for 1 hour. Then, a graft monomer mixture (MG-2) having each of the compositions shown in Table 2 was added dropwise over 1 hour. After the completion of the addition, stirring was further continued for 2 hours to obtain a latex of each of organopolysiloxane-based graft copolymers (SG-1 to 3). The results of measurement of the polymerization conversion of all graft segments and the latex particle size are shown in Table 2.

**TABLE 2**

| Reference Example | | | | 5 | 6 | 7 |
|---|---|---|---|---|---|---|
| Polyorganosiloxane-containing graft copolymer | | | | SG-1 | SG-2 | SG-3 |
| | Polyorganosiloxane particles | S-1 | Parts | 80 | - | - |
| | | S-2 | Parts | - | 70 | - |
| | | S-3 | Parts | - | - | 80 |
| | Polymerization temperature | | °C | 60 | 60 | 60 |
| | Graft monomer in first step (MG-1) | A1MA | Parts | 1.2 | 4 | 4 |
| | | CHP | Parts | 0.04 | - | - |
| | | PMHP | Parts | - | 0.16 | 0.16 |
| | Graft monomer in second step (MG-2) | MMA | Parts | 20 | 30 | 20 |
| | | CHP | Parts | 0.08 | - | - |
| | | PMHP | Parts | - | 0.24 | 0.16 |
| Polymerization conversion (only graft component) | | | | 99 % | 100 % | 100 % |
| Volume-average particle size | | | µm | 0.26 | 0.26 | 0.30 |

### EXAMPLES 1 to 5

### Organopolysiloxane-based graft copolymer composition (SGC-1 to 5)

Ion-exchanged water was added to the latex of each of the organopolysiloxane-based graft copolymers (SG-1 to 3) produced in Reference Examples 5 to 7 to attain a solid content of 15 %. Then, a 2.5 % aqueous calcium chloride solution in the amount shown in Table 3 was added to the resultant mixture to obtain a coagulated slurry. Furthermore, water was added to the slurry to attain a solid content of 12 %. The resultant coagulated slurry was heated to 95°C, maintained at 95°C for 2 minutes, cooled to 50°C, dehydrated, and then dried to obtain a powder of each polyorganosiloxane-based graft copolymer. Then, 500 parts by weight of methanol was added to the resultant powder to suspend the powder at 20°C, and then the resulting suspension was filtered.

Furthermore, 500 parts by weight of water was added to the resulting solid to re-suspend the solid in water at 20°C, and the resulting suspension was filtered and then dried. The results of quantitative analysis of the contents of chlorine atoms and calcium atoms and measurement of the amount of coarse particles are shown in Table 3.

Then, a 15 % aqueous sodium dodecylbenzenesulfonate solution (solid) in each of the amounts shown in Table 3 was added to the resultant powder, and the resultant mixture was further dried to obtain each of organopolysiloxane-based graft copolymer compositions (SGC-1 to 5).

**TABLE 3**

| Example | | | | 1 | 2 | 3 | 4 | 5 | 6 | 7 | 8 | 9 | 10 | 11 | 12 |
|---|---|---|---|---|---|---|---|---|---|---|---|---|---|---|---|
| Organopolysiloxane-containing graft copolymer composition | | | | SGC-1 | SGC-2 | SGC-3 | SGC-4 | SGC-5 | SGC-6 | SGC-7 | SGC-8 | SGC-9 | SGC-10 | SGC-11 | SGC-12 |
| Recovery conditions and analytical values of organo-polysiloxane-containing graft copolymer | Organopolysiloxane-containing graft copolymer (A) | | | SG-1 | SG-2 | SG-2 | SG-2 | SG-3 | SG-3 | SG-3 | SG-3 | SG-3 | SG-3 | SG-3 | SG-3 |
| | Coagulant | Type | | CaCl₂ | CaCl₂ | CaCl₂ | CaCl₂ | CaCl₂ | CaCl₂ | CaCl₂ | CaCl₂ | CaCl₂ | CaCl₂ | CaCl₂ | CaCl₂ |
| | | Amount | Parts | 5.0 | 4.0 | 4.0 | 4.0 | 4.0 | 4.0 | 4.0 | 4.0 | 4.0 | 4.0 | 4.0 | 4.0 |
| | Washing water in dehydration | Temp. | °C | - | - | - | - | - | - | 26 | 50 | 26 | 26 | 26 | 26 |
| | | Amount | Parts | - | - | - | - | - | - | 400 | 400 | 2000 | 4000 | 6000 | 8000 |
| | Washing solvent | Type | | MeOH/ H₂O | MeOH/ H₂O | MeOH/ H₂O | MeOH/ H₂O | MeOH/ H₂O | MeOH | - | - | - | - | - | - |
| | | Temp. | °C | 20 | 20 | 20 | 20 | 20 | 20 | - | - | - | - | - | - |
| | | Amount | Parts | 500/ 500 | 500/ 500 | 500/ 500 | 500/ 500 | 500/ 500 | 500 | - | - | - | - | - | - |
| | Content of halogen atoms | Element | | Cl | Cl | Cl | Cl | Cl | Cl | Cl | Cl | Cl | Cl | Cl | Cl |
| | | Amount | ppm | 210 | 190 | 190 | 190 | 170 | 190 | 600 | 600 | 80 | 50 | 30 | 20 |
| | Content of alkaline-earth metal atoms | Element | | Ca | Ca | Ca | Ca | Ca | Ca | Ca | Ca | Ca | Ca | Ca | Ca |
| | | Amount | ppm | 420 | 460 | 460 | 460 | 460 | 500 | 1550 | 1370 | 710 | 450 | 300 | 160 |
| | Amount of coarse particles | | % | 20 | 18 | 18 | 18 | 32 | 48 | 19 | 50 | 24 | 22 | 27 | 28 |
| Alkali metal salt of sulfur-containing organic compound (B) | | Type | | SDBS | SDBS | SDBS | SDBS | SDBS | SDBS | SDBS | SDBS | SDBS | SDBS | SDBS | SDBS |
| | | Amount | Parts | 0.5 | 0.25 | 0.5 | 1.25 | 0.5 | 0.5 | 0.75 | 0.75 | 0.75 | 0.75 | 0.75 | 0.75 |

### EXAMPLE 6

### Organopolysiloxane-based graft copolymer composition (SGC-6)

An organopolysiloxane-based graft copolymer composition (SGC-6) was produced by the same method as in Example 5 except that drying was performed after addition of methanol, stirring, and filteration without re-addition of water, stirring, and filteration. The results of quantitative analysis of the contents of chlorine atoms and calcium atoms and measurement of the amount of coarse particles are shown in Table 3.

EXAMPLES 7 to 12

### Organopolysiloxane-based graft copolymer composition (SGC-7 to 12)

Each of organopolysiloxane-based graft copolymer compositions (SGC-7 to 12) was produced by the same method as in Example 5 except that methanol was not added, and that the operation of suspending the resin in 400 parts by weight of ion-exchanged water at the temperature shown in Table 3 after dehydration and then dehydrating the resultant suspension was repeated until the total of the ion-exchanged water used reached the value shown in Table 3, and then drying the resultant solid. The results of quantitative analysis of the contents of chlorine atoms and calcium atoms and measurement of the amount of coarse particles are shown in Table 3.

### COMPARATIVE EXAMPLE 1

### Organopolysiloxane-based graft copolymer composition (SGC'-1)

An organopolysiloxane-based graft copolymer composition (SGC'-1) was produced by the same method as in Example 1 except that the amounts of methanol and water added and the amount of sodium dodecylbenzenesulfonate added were as shown in Table 4. The results of quantitative analysis of the contents of chlorine atoms and calcium atoms and measurement of the amount of coarse particles are shown in Table 4.

**TABLE 4**

| Comparative Example | | | | 1 | 2 | 3 | 4 | 5 | 6 | 7 |
|---|---|---|---|---|---|---|---|---|---|---|
| Organopolysiloxane-containing graft copolymer composition | | | | SGC'-1 | SGC'-2 | SGC'-3 | SGC'-4 | SGC'-5 | SGC'-6 | SGC'-7 |
| Recovery conditions and analytical values of organo-polysiloxane-containing graft copolymer | Organopolysiloxane-containing graft copolymer (A) | | | SG-1 | SG-2 | SG-2 | SG-2 | SG-2 | SG-3 | SG-3 |
| | Coagulant | Type | | CaCl₂ | CaCl₂ | CaCl₂ | CaCl₂ | CaCl₂ | CaCl₂ | CaCl₂ |
| | | Amount | Parts | 5.0 | 4.0 | 4.0 | 4.0 | 4.0 | 4.0 | 4.0 |
| | Washing water in dehydration Washing solvent | Temp. | °C | - | - | - | - | - | - | - |
| | | Amount | Parts | - | - | - | - | - | - | - |
| | | Type | | MeOH/ H₂O | MeOH/ H₂O | MeOH/ H₂O | - | - | MeOH/ H₂O | MeOH/ H₂O |
| | | Temp. | °C | 20 | 20 | 20 | - | - | 20 | 20 |
| | | Amount | Parts | 500/500 | 500/500 | 500/500 | - | - | 500/500 | 500/500 |
| | Content of halogen atoms | Element | | Cl | Cl | Cl | Cl | Cl | Cl | Cl |
| | | Amount | ppm | 210 | 190 | 190 | 5160 | 5160 | 170 | 170 |
| | Content of alkaline-earth metal atoms | Element | | Ca | Ca | Ca | Ca | Ca | Ca | Ca |
| | | Amount | ppm | 420 | 460 | 460 | 5780 | 5780 | 460 | 460 |
| | Amount of coarse Particles | | % | 20 | 18 | 18 | 9 | 9 | 32 | 32 |
| Alkali metal salt of sulfur-containing organic compound (B) | | Type | | - | - | SDBS | - | SDBS | - | SDBS |
| | | Amount | Parts | - | - | 6 | - | 6 | - | 6 |

### COMPARATIVE EXAMPLES 2 to 5

### Organopolysiloxane-based graft copolymer composition (SGC'-2 to 5)

Each of organopolysiloxane-based graft copolymer compositions (SGC'-2 to 5) was produced by the same method as in Example 3 except that the amounts of methanol and water added and the amount of sodium dodecylbenzenesulfonate added were as shown in Table 4. The results of quantitative analysis of the contents of chlorine atoms and calcium atoms and measurement of the amount of coarse particles are shown in Table 4.

### COMPARATIVE EXAMPLES 6 and 7

### Organopolysiloxane-based graft copolymer composition (SGC'-6 and 7)

Each of organopolysiloxane-based graft copolymer compositions (SGC'-6 and 7) was produced by the same method as in Example 5 except that the amount of sodium dodecylbenzenesulfonate added was as shown in Table 4. The results of quantitative analysis of the contents of chlorine atoms and calcium atoms and measurement of the amount of coarse particles are shown in Table 4.

### COMPARATIVE EXAMPLES 8 to 11

### Organopolysiloxane-based graft copolymer composition (SGC'-8 to 11)

Each of organopolysiloxane-based graft copolymer compositions (SGC'-8 to 11) was produced by the same method as in Example 7 except that the amount of washing water used in dehydration and the amount of sodium dodecylbenzenesulfonate added were as shown in Table 5. The results of quantitative analysis of the contents of chlorine atoms and calcium atoms and measurement of the amount of coarse particles are shown in Table 5.

**TABLE 5**

| Comparative Example | | | | 8 | 9 | 10 | 11 |
|---|---|---|---|---|---|---|---|
| Organopolysiloxane-containing graft copolymer composition | | | | SGC'-8 | SGC'-9 | SGC'-10 | SGC'-11 |
| Recovery conditions and analytical values of organo-polysiloxane-containing graft copolymer | Organopolysiloxane-containing graft copolymer (A) | | | SG-3 | SG-3 | SG-3 | SG-3 |
| | Coagulant | Type | | CaCl₂ | CaCl₂ | CaCl₂ | CaCl₂ |
| | | Amount | Parts | 4.0 | 4.0 | 4.0 | 4.0 |
| | Washing water in dehydration | Temp. | °C | - | - | 26 | 26 |
| | | Amount | Parts | - | - | 400 | 400 |
| | Washing solvent | Type | | - | - | - | - |
| | | Temp. | °C | - | - | - | - |
| | | Amount | Parts | - | - | - | - |
| | Content of halogen atoms | Element | | Cl | Cl | Cl | Cl |
| | | Amount | ppm | 4400 | 4400 | 580 | 580 |
| | Content of alkaline-earth metal atoms | Element | | Ca | Ca | Ca | Ca |
| | | Amount | ppm | 4770 | 4770 | 1550 | 1550 |
| | Amount of coarse Particles | | % | 13 | 13 | 19 | 19 |
| Alkali metal salt of sulfur-containing organic compound (B) | | Type | | - | SDBS | SDBS | SDBS |
| | | Amount | Parts | - | 0.75 | - | 6 |

### EXAMPLES 13 to 24 and COMPARATIVE EXAMPLES 12 to 22

### Flame-retardant polycarbonate resin composition

First, 3 parts by weight of each of the organopolysiloxane-based graft copolymer compositions (SGC-1 to 12 and SGC'-1 to 11) produced in Examples 1 to 12 and Comparative Examples 1 to 11 and 0.4 part by weight of polytetrafluoroethylene (trade name: Polyfron FA-500, manufactured by Daikin Industries, Ltd.,) per 100 parts by weight of polycarbonate resin (trade name: Panlite L1225WX, manufactured by Teijin Chemicals Ltd.,) were mixed. The resultant mixture was melt-kneaded at 270°C with a two-screw extruder (TEX44SS manufactured by The Japan Steel Works, Ltd.) and pelletized. The resultant pellets were formed into a 1/20-inch test piece for evaluating flame retardancy and a 1/8-inch test piece for evaluating impact resistance using a FAS100B injection molding machine manufactured by FANUC Ltd. with a cylinder set to 280°C. The test pieces were evaluated according to the above-described evaluation methods. The results of impact resistance and flame retardancy of the molded products are also shown in Tables 6 to 8.

**TABLE 6**

| Example | | | | 13 | 14 | 15 | 16 | 17 | 18 | 19 | 20 | 21 | 22 | 23 | 24 |
|---|---|---|---|---|---|---|---|---|---|---|---|---|---|---|---|
| Polycarbonate | | | Parts | 100 | 100 | 100 | 100 | 100 | 100 | 100 | 100 | 100 | 100 | 100 | 100 |
| Organopolysiloxane-containing graft copolymer composition | | | | SGC -1 | SGC -2 | SGC -3 | SGC -4 | SGC -5 | SGC -6 | SGC -7 | SGC -8 | SGC -9 | SGC -10 | SGC -11 | SGC -12 |
| | Amount of coarse particles | | % | 20 | 18 | 18 | 18 | 32 | 48 | 19 | 50 | 24 | 22 | 27 | 28 |
| Alkali metal salt of | | Type | | - | - | - | - | - | - | - | - | - | - | - | - |
| sulfur-containing organic compound mixed on compounding | | Amount | Parts | - | - | - | - | - | - | - | - | - | - | - | - |
| PTFE | | | Parts | 0.4 | 0.4 | 0.4 | 0.4 | 0.4 | 0.4 | 0.4 | 0.4 | 0.4 | 0.4 | 0.4 | 0.4 |
| Physical property values | Flame retardancy (1/20 inch) | Total flaming time | Sec. | 35 | 41 | 49 | 65 | 48 | 47 | 58 | 52 | 46 | 45 | 47 | 47 |
| | | Dripping | Number of times | No | No | No | No | No | No | No | No | No | No | No | No |
| | Impact resistance (Izod strength) | 1/8 inch, 0°C | kJ/m² | 22 | 26 | 25 | 25 | 28 | 26 | 26 | 26 | 29 | 30 | 31 | 31 |

**TABLE 7**

| Comparative Example | | | | 12 | 13 | 14 | 15 | 16 | 17 | 18 | 19 |
|---|---|---|---|---|---|---|---|---|---|---|---|
| Polycarbonate | | | Parts | 100 | 100 | 100 | 100 | 100 | 100 | 100 | 100 |
| Organopolysiloxane-containing graft copolymer composition | | | | SGC'-1 | SGC'-2 | SGC'-3 | SGC'-4 | SGC'-5 | SGC'-6 | SGC'-7 | SGC'-8 |
| | Amount of coarse particles | | % | 20 | 12 | 18 | 18 | 9 | 9 | 32 | 32 |
| Alkali metal salt of sulfur-containing organic compound mixed on compounding | | Type | | - | - | - | - | - | - | - | - |
| | | Amount | Parts | - | - | - | - | - | - | - | - |
| PTFE | | | Parts | 0.4 | 0.4 | 0.4 | 0.4 | 0.4 | 0.4 | 0.4 | 0.4 |
| Physical property values | Flame retardancy (1/20 inch) | Total flaming time | Sec. | 88 | 84 | 121 | 184 | 110 | 226 | 121 | 190 |
| | | Dripping | Number of times | No | No | No | Yes | No | Yes | Yes | Yes |
| | Impact resistance (Izod strength) | 1/8 inch, 0°C | kJ/m² | 23 | 19 | 28 | 20 | 26 | 19 | 26 | 20 |

**TABLE 8**

| Comparative Example | | | | 20 | 21 | 22 |
|---|---|---|---|---|---|---|
| Polycarbonate | | | Parts | 100 | 101 | 102 |
| Organopolysiloxane-containing graft copolymer composition | | | | SGC'-9 | SGC'-10 | SGC'-11 |
| | Amount of coarse particle | | % | 13 | 13 | 19 |
| Alkali metal salt of sulfur-containing organic compound mixed on compounding | | Type | | - | - | - |
| | | Amount | Parts | - | - | - |
| PTFE | | | Parts | 0.4 | 0.4 | 0.4 |
| Physical property values | Flame retardancy (1/20 inch) | Total flaming time | Sec. | 101 | 94 | 107 |
| | | Dripping | Number of times | No | No | No |
| | Impact resistance (Izod strength) | 1/8 inch, 0°C | kJ/m² | 23 | 25 | 24 |

In the tables, each abbreviation represents the following:
SDBS: sodium dodecylbenzenesulfonate
D4: 1,3,5,7-octamethylcyclotetrasiloxane
DHPDMS: α,ω-dihydroxyorganopolysiloxane having a number of silicon atoms of 10 or less and a content of cyclic low-molecular-weight siloxane of 0.7 % by weight
DSMA: methacryloyloxypropyldimethoxymethylsilane
MPrDMS: mercaptopropyldimethoxymethylsilane
DBSA: dodecylbenzenesulfonic acid
AlMA: allyl methacrylate
PMHP: p-menthane hydroperoxide
MMA: methyl methacrylate
CHP: cumene hydroperoxide
CaCl₂: calcium chloride
MeOH: methanol
H₂O: ion-exchanged water
MeOH/H₂O as a washing solvent represents that water was used after washing with methanol.

Tables 6 to 8 show that in any of Comparative Examples, either flame retardancy or impact resistance is excellent or both of the properties are unfavorable, while in any of Examples, both of the flame retardancy and the impact resistance are excellent.

### INDUSTRIAL APPLICABILITY

Applications of molded products obtained using the flame-retardant resin composition of the present invention are not particularly limited, but the composition can be applied to, for example, a desktop computer, a laptop computer, a printer, a copying machine, and the like, which require flame retardancy.

## Claims

1. An organopolysiloxane-containing graft copolymer composition comprising 100 parts by weight of an organopolysiloxane-containing graft copolymer (A) and 0.02 to 3.5 parts by weight of an alkali metal salt of sulfur-containing organic compound (B), wherein the content of halogen atoms is 1,000 ppm or less, and the content of alkaline-earth metal atoms is 3,000 ppm or less.

2. An organopolysiloxane-containing graft copolymer composition produced by adding 0.02 to 3.5 parts by weight of an alkali metal salt of sulfur-containing organic compound (B) to 100 parts by weight of an organopolysiloxane-containing graft copolymer (A) having a content of halogen atoms of 1,000 ppm or less, and a content of alkaline-earth metal atoms of 3,000 ppm or less.

3. The organopolysiloxane-containing graft copolymer composition according to claim 1 or 2, wherein the organopolysiloxane-containing graft copolymer (A) is produced by polymerizing, in the presence of an organopolysiloxane (C) in a latex state, a vinyl monomer (F) comprising 100 to 50 % by weight of a polyfunctional monomer (D) having two or more polymerizable unsaturated bonds in its molecule and 0 to 50 % by weight of another copolymerizable monomer (E) in at least one step according to demand, and further polymerizing a vinyl monomer (G) in at least one step.

4. The organopolysiloxane-containing graft copolymer composition according to any one of claims 1 to 3, wherein the organopolysiloxane-containing graft copolymer (A) has a content of halogen atoms of 1,000 ppm or less, and a content of alkaline-earth metal atoms of 3,000 ppm or less.

5. The organopolysiloxane-containing graft copolymer composition according to any one of claims 1 to 4, wherein the alkali metal salt of sulfur-containing organic compound (B) is added to the organopolysiloxane-containing graft copolymer (A).

6. The organopolysiloxane-containing graft copolymer composition according to any one of claims 1 to 5, wherein the content of alkaline-earth metal is 200 to 3,000 ppm.

7. The organopolysiloxane-containing graft copolymer composition according to any one of claims 1 to 6, wherein the alkaline-earth metal is calcium.

8. The organopolysiloxane-containing graft copolymer composition according to any one of claims 1 to 7, wherein the organopolysiloxane-containing graft copolymer (A) is washed with a solvent.

9. The organopolysiloxane-containing graft copolymer composition according to claim 8, wherein the solvent is water and/or an alcohol having 4 or less carbon atoms.

10. The organopolysiloxane-containing graft copolymer composition according to claim 9, wherein the organopolysiloxane-containing graft copolymer (A) is washed with water in an amount of 70 times or less the weight of the copolymer (A).

11. The organopolysiloxane-containing graft copolymer composition according to claim 9 or 10, wherein the organopolysiloxane-containing graft copolymer (I) is washed with water at a temperature lower than 40°C.

12. A process for producing the graft copolymer composition according to any one of claims 1 to 11.

13. A flame retardant comprising the graft copolymer composition according to any one of claims 1 to 12.

14. The resin composition according to any one of claims 1 to 13, further comprising a resin selected from thermoplastic resins, thermosetting resins, and elastomers.

15. The resin composition according to claim 14, wherein the thermoplastic resin is a polycarbonate resin.
